# EUROPÄISCHE PATENTSCHRIFT

(11) **EP 0 932 583 B1**
(45) Veröffentlichungstag und Bekanntmachung des Hinweises auf die Patenterteilung: **09.07.2003**
(21) Anmeldenummer: 97942143.5
(22) Anmeldetag: 08.10.1997
(51) Int. Cl.: C02F 1/46

(54) **VERWENDUNG EINER ELEKTROLYSEVORRICHTUNG ZUR REDUZIERUNG BZW. VERHINDERUNG DER STEINBILDUNG**
USE OF AN ELECTROLYTICAL APPARATUS TO REDUCE OR PREVENT SCALING
UTILISATION D'UN APPAREIL ELECTROLYTIQUE POUR REDUIRE OU EMPECHER L'ENTARTRAGE

(30) Priorität: 15.10.1996 CH 250896; 29.07.1997 CH 181697
(43) Veröffentlichungstag der Anmeldung: 04.08.1999
(73) Patentinhaber: Weissenbacher, Andreas, 5310 Mondsee (AT)
(72) Erfinder: WEISSENBACHER, Andreas, A-5310 Mondsee (AT); JOHANN, Jürgen, D-69226 Nussloch (DE); OBERHAUSER, Ernst, A-5440 Golling (AT); IRAUSCHEK, Helmut, A-5261 Uttendorf (AT)
(74) Vertreter: Zimmermann, Hans, Dr.
(86) Internationale Anmeldenummer: IB9701243
(87) Internationale Veröffentlichungsnummer: WO98016477

(56) Entgegenhaltungen:
- EP-A- 0 171 357
- EP-A- 0 408 984
- FR-A- 2 547 573
- US-A- 3 888 756
- US-A- 4 119 518
- US-A- 4 176 038
- US-A- 5 256 268
- PATENT ABSTRACTS OF JAPAN vol. 018, no. 307 (C-1211), 13.Juni 1994 & JP 06 063558 A (KONICA CORP), 8.März 1994,
- PATENT ABSTRACTS OF JAPAN vol. 016, no. 190 (C-0937), 8.Mai 1992 & JP 04 027491 A (KONICA CORP), 30.Januar 1992, in der Anmeldung erwähnt

## Beschreibung

Die Erfindung betrifft die Verwendung einer Elektrolysevorrichtung zur Reduzierung oder Verhinderung der Steinbildung aus wässrigen Lösungen.

Die Steinbildung aus wässrigen Lösungen ist vor allem auf den Calcium- und Magnesiumgehalt natürlicher Wässer zurückzuführen und stellt sowohl in Industrie- und Gewerbebetrieben als auch im Haushalt ein generelles Problem dar, da sie einen erheblichen Wartungsaufwand bedingt und die Lebensdauer der Geräte verkürzt. Um diese Probleme zu vermeiden, werden üblicherweise Chemikalien zugesetzt, die die Steinbildung verhindern, oder die zu Steinbildung führenden Stoffe z.B. mittels Ionenaustauschverfahren, Umkehrosmose, Elektrolyse und dergleichen abgetrennt.

Andererseits ist bekannt, dass die Verwendung von bipolaren Elektroden, die als Festbett leitender und nicht leitender Partikel oder als Wirbelbett leitender Parikel ausgebildet sein können, in Elektrolyseverfahren höhere Raum-Zeit-Ausbeuten ermöglichen. Solche Verfahren sind beispielsweise in Electrochimica Acta 22, 347-352 (1977) und in Electrochimica Acta 22, 1087-1091 (1977) zur Herstellung von Hypobromit, zur Epoxidierung von Styrol, zur Synthese des Dimethylesters von Sebacinsäure und zur Herstellung von Hypochlorit aus Meerwasser beschrieben. Bipolare Elektroden wurden jedoch in der Wasseraufbereitung bisher nicht eingesetzt.

Aus GB-A-1 409 419 ist ferner ein Verfahren zur Unschädlichmachung von Schadstoffen, wie Chromsäure, Cyanid oder Nitrat, in wässrigen Lösungen mittels Elektrolyse unter Verwendung einer bipolaren Festbettelektrode bekannt, bei welchem dem Elektrolyten eine Verbindung zugesetzt wird, die bzw. deren Reaktionsprodukt mit dem Schadstoff unter Bildung einer unschädlichen Verbindung reagiert. Die bipolare Elektrode besteht aus nicht metallischen, elektrisch leitenden Teilchen und kann vorzugsweise auch nicht leitende Teilchen enthalten.

Eine Elektrolysezelle mit bipolarer Festbettelektrode, die zum leichteren Austausch des Festbetts am oberen Ende aufklappbar ist, wird in JP-A-04/027 491 beschrieben.

Eine elektrochemische Entfernung kontaminierender Ionen aus einem wässrigen Medium wird auch in US-A-4 123 339 beschrieben, wobei jedoch bei dieser Methode Elektroden aus Eisen oder einer unlöslichen Eisenverbindung eingesetzt und unter der Einwirkung von Gleichstrom an der Anode Eisenionen abgegeben und an der Kathode Hydroxid gebildet wird, womit sich zusammmen mit den kontaminierenden Ionen ein unlösliches Material bilden soll, das abgetrennt werden kann. Mittels Spannungsumkehr kann ein gleichmässiger Abbau der Elektroden erreicht werden.

US-A-3 915 822 beschreibt eine elektrochemische Zelle, die in der Reaktionszone mindestens ein Bett elektrisch leitender Partikel enthält und die mehrere Elektroden aufweist, die benachbarte chemische Sektionen definieren, in denen unterschiedliche Spannungsgradienten eingehalten werden können. Die Zelle soll sich zur Metallrückgewinnung, zur Adsorption und Desorption organischer Verbindungen, zur Oxidation von Abwässern, zur Synthese organischer und anorganischer Verbindungen und dergleichen eignen.

In DE-C-41 07 708 wird ein Verfahren zum Behandeln von fliessendem Wasser gegen Kalkablagerungen durch Kavitation und ein elektrisches Wechselfeld vorgeschlagen, in welchem durch Kaviation im zu behandelnden Wasser Zonen gebildet werden, in denen der Druck deutlich unter den Umgebungsdruck sinkt, wodurch es zu einem lokalen Ausgasen des im Wasser gelösten CO₂ und damit zu einer Störung des Kalk-Kohlensäure-Gleichgewichts und einer Verschlechterung der Calcium-Löslichkeit kommen soll, und in welchem das so behandelte Wasser zwischen mindestens zwei Elektroden durchgeleitet wird. Durch Verwendung von Elektroden mit strukturierter Oberfläche, z.B. Noppen, soll es möglich sein, den gewünschten Behandlungseffekt mit niedrigen Spannungen zu erzielen. In der Praxis hat sich allerdings gezeigt, dass mit diesem Verfahren die Kalkablagerung kaum signifikant verringert werden kann.

Weiterhin ist aus EP-A-0 171 357 ein elektrochemisches Verfahren zur Enthärtung von Wasser bekannt, bei dem der alkalische pH in der Umgebung der Kathode eine Ausfällung der Ca- und Mg-Ionen in Form ihrer Oxide und Hydroxide bewirkt, die sich an einem zwischen den Elektroden angeordneten porösen inerten Material ablagert. Zur Regeneration des porösen Material kann die Polarität der Elektroden umgekehrt werden.

Da die bekannten Methoden, mit denen Steinbildung aus wässrigen Lösungen wirksam verhindert oder verringert werden kann, den Zusatz von Chemikalien oder die völlige oder weitgehende Abtrennung der zu Steinbildung führenden Stoffe bedingen, sind sie in der Wasseraufbereitung oft nicht oder nur schlecht geeignet. Insbesondere ist es in der Trinkwasseraufbereitung in der Regel erwünscht, dass der natürliche Salzgehalt des Trinkwassers nicht oder nur geringfügig verändert wird.

Überraschenderweise wurde nun gefunden, dass die Steinbildung erheblich verringert oder gar verhindert werden kann, wenn die wässrige Lösung in einer Elektrolysevorrichtung vorbehandelt wird, die eine bipolare Elektrode aufweist und in der die Stromrichtung des Gleichstromes periodisch umgekehrt wird. In Vergleichsversuchen wurde z.B. festgestellt, dass die Steinbildung in einem nachgeschalteten Boiler mit einer solchen Vorbehandlung weitgehend oder völlig vermieden wird. Dieser Befund ist vor allem auch deshalb überraschend, weil der Effekt auch dann eintritt, wenn der Salzgehalt und der pH-Wert des Wassers praktisch unverändert bleiben.

Eine Erklärung für diesen Effekt steht bisher aus. Möglicherweise wird durch eine geringe Verschiebung des Kalk-Kohlensäure-Gleichgewichts die Kinetik der Calcitausfällung derart verzögert, dass bei üblichen Verweilzeiten in Rohrleitungen und Warmwassererzeugern eine Steinbildung deutlich reduziert oder verhindert wird.

Die vorliegende Erfindung betrifft daher die Verwendung einer Elektrolysevorrichtung zur Reduzierung oder Verhinderung der Steinbildung aus wässrigen Lösungen, wie in Anspruch 1 definiert.

Im Rahmen der vorliegenden Erfindung umfassen die Ausdrücke "Elektrode" und "Elektrolysekammer" Elektroden und Elektrolysekammern wie sie dem Fachmann aus Elektrolysen bekannt sind oder nachfolgend beschrieben werden. Die im wesentlichen unveränderte Zusammensetzung des Wassers bedeutet im Rahmen der vorliegende Erfindung, dass der Salzgehalt, und insbesondere der Gehalt an zu Steinbildung neigenden Salzen, der behandelten wässrigen Lösung nicht wesentlich von jenem der zugeführten, zur Steinbildung neigenden wässrigen Lösung abweicht. Da bei der erfindungsgemässen Verwendung eine Abtrennung der gelösten Salze im wesentlichen vermieden werden kann, weicht die Gesamthärte der behandelten Lösung nicht wesentlich von jener der zugeführten Lösung ab.

Die erfindungsgemässe Verwendung gestattet eine im wesentlichen wartungsfreie Methode zur Verringerung oder völligen Verhinderung der Steinbildung aus wässrigen, zu Steinbildung neigenden Lösungen, ohne den Salzgehalt oder den pH-Wert der Lösung wesentlich verändern oder chemische Enthärtungmittel zusetzen zu müssen und ohne dass Salze wie Calcit oder überhartete Wässer als Abfall anfallen. Sie eignet sich grundsätzlich zur Behandlung beliebiger zu Steinbildung neigender wässriger Lösungen. Ein besonders bevorzugtes Einsatzgebiet ist die Trinkwasseraufbereitung (d.h. die Behandlung von Wässern, deren Härte im wesentlichen auf die Anwesenheit von Calcium- und Magnesiumionen zurückzuführen ist), sie es trotz weitgehender oder völliger Verhinderung der Steinbildung im wesentlichen die Beibehaltung der natürlichen Wasserqualität ermöglicht. Ein weiteres bevorzugtes Einsatzgebiet ist die Vorbehandlung von Wässern für Waschmaschinen, Spülmaschinen und andere Geräte, in denen bisher üblicherweise ein Enthärtungsmittel zugesetzt werden musste.

Ein bevorzugter Aspekt der erfindungsgemässen Verwendung betrifft daher die Behandlung von Wasser mit einem natürlichen Gehalt an Carbonaten, Hydrogencarbonaten und Sulfaten von Calcium und Magnesium.

Mit der erfindungsgemässen Verwendung kann vermieden werden, dass Salzablagerungen wie Calcit als solche oder - infolge einer Umpolung der Elektroden zur Entfernung von Ablagerungen - in Form von überhartem Wasser als Abfall anfallen, d.h. sie zeichnet sich dadurch aus, dass die gesamte, der Elektrolysekammer zugeführte wässrige Lösung nach dem Durchfluss durch die Elektrolysekammer eine deutlich verringerte Neigung zur Steinbildung aufweist und im wesentlichen kein Calcit oder überhartes Wasser als Abfall anfällt. Da eine Abtrennung der gelösten Salze im wesentlichen vermieden werden kann, weist die erfindungsgemäss behandelte wässrige Lösung eine Gesamthärte auf, die vorzugsweise höchstens etwa 1°dH (deutscher Härtegrad), insbesondere höchstens etwa 0,5°dH, unterhalb jener der zugeführten wässrigen Lösung liegt. Da auch der pH-Wert der wässrigen Lösung erfindungsgemäss nicht wesentlich verändert wird, weist die behandelte Lösung einen pH-Wert auf, der vorzugsweise höchstens um etwa 0,05 von jenem der zugeführten Lösung abweicht.

Die oben erwähnte Umpolung der Elektroden im Falle des Betriebs mit Gleichstrom bewirkt eine Änderung der Feldrichtung und der Stromrichtung in der Elektrolysekammer. Sie kann zweckmässigerweise durch eine Umpolung der angelegten elektrischen Gleichspannung mittels üblicher und dem Fachmann bestens geläufiger Regel- und Steuereinheiten bewerkstelligt werden.

Die Umpolung kann periodisch nach jeweils gleichbleibenden Zeitintervallen, z.B. alle 2 Sekunden, oder auch nach unterschiedlich langen Zeitintervallen, beispielsweise alternierend nach kürzeren (z.B. 30 Sekunden) und längeren (z.B. 45 Sekunden) Zeitintervallen, erfolgen. Die Länge der Zeitintervalle ist nicht kritisch; im allgemeinen haben sich aber Intervalle von höchstens etwa 60 Sekunden, vorzugsweise etwa 1 bis 60 Sekunden bewährt.

Gemäss der einfachsten und bevorzugten Ausführungsform kann der elektrische Gleichstrom über zwei Elektroden, die abwechselnd als Kathode und Anode geschaltet sind, zuund abgeführt werden. Gewünschtenfalls können aber auch mehr als zwei Elektroden verwendet werden, beispielsweise drei Elektroden, von denen jeweils zwei als Anode und eine als Kathode geschaltet sind, oder vier Elektroden, von denen je zwei als Anode bzw. als Kathode geschaltet sind.

Der optimale Wert der elektrischen Gleich spannung ist u.a. vom Elektrodenabstand abhängig, liegt aber meist im Bereich von etwa 5 bis 20 V pro cm Elektrodenabstand. Die Durchflussraten der wässrigen Lösung und die Stromstärke sind von der Dimensionierung der Vorrichtung, dem Salzgehalt, der Spannung und dergleichen abhängig, sind aber nicht kritisch. Im allgemeinen wird aber das Verfahren so betrieben, dass das Verhältnis der Stromstärke des durch die Elektrolysekammer fliessenden elektrischen Stromes zur Durchflussrate der zugeführten wässrigen Lösung höchstens etwa 2 A·h/m³ beträgt, wobei ein Bereich von etwa 0,5 bis 1,5 A·h/m³, insbesondere etwa 1,0 bis 1,3 A·h/m³, bevorzugt ist. Ferner ist es im allgemeinen bevorzugt, das Verfahren stromkonstant zu betreiben, wobei sich beispielsweise für Kleingeräte mit einem Elektrodenabstand von etwa 2 cm eine Stromstärke von höchstens etwa 4 A, vorzugsweise höchstens etwa 2 A, bewährt hat. Typischerweise kann die Stromstärke etwa 1-2 A, die Spannung etwa 20-40 V und die Durchflussrate etwa 0,05 bis 3 m³/h betragen.

Bei der ersten Inbetriebnahme der Vorrichtung stellt sich eine starke Verringerung der Neigung zu Steinbildung im allgemeinen erst allmählich ein, was möglicherweise darauf zurückzuführen sein könnte, dass der erzielbare Effekt erst dann voll zum Tragen kommt, wenn sich auf den Elektroden und der bipolaren Elektrode eine gewisse minimale Menge an Calcit abgelagert hat. Es wurde jedoch gefunden, dass der optimale Effekt in der Regel bereits nach dem Durchfluss von etwa 3-4 m³ wässriger Lösung erreicht wird, wenn der Elektrolysekammer bei der ersten Inbetriebnahme oder nach einer Reinigung der Elektrolysekammer (bzw. einem Austausch der bipolaren Elektrode) eine zur Steinbildung neigende wässrige Lösung zugeführt wird, an den Elektroden eine Gleichspannung anliegt und die Elektroden abwechselnd in kürzeren und längeren Zeitintervallen umgepolt werden, bis die behandelte wässrige Lösung eine signifikante Verringerung der Neigung zur Steinbildung aufweist.

Zur erfindungsgemässen Verwendung eignen sich Elektrolysevorrichtungen, umfassend ein Wassereinlasssystem, ein Wasserauslasssystem und eine Elektrolysekammer mit mindestens zwei Elektroden, von denen im Falle einer anliegenden Gleichspannung mindestens eine als Kathode und mindestens eine als Anode geschaltet ist, und einer zwischen den Elektroden angeordneten bipolaren Elektrode, wobei die Vorrichtung ferner dadurch gekennzeichnet ist, dass die Elektroden über eine Regeleinheit so an eine Gleichspannungsquelle angeschlossen sind, dass die Elektroden in Zeitintervallen umpolbar sind.

Vorzugsweise kann die Elektrolysekammer gegen das Wassereinlasssystem und gegen das Wasserauslasssystem durch eine mit Durchlassöffnungen versehene Umhüllung abgegrenzt sein. Die Durchlassöffnungen sollten in ihrer Grösse und Form vorzugsweise so gewählt werden, dass der Durchfluss der wässrigen Lösung möglichst wenig behindert wird, aber andererseits bei Verwendungs einer bipolaren Partikelelektrode möglichst keine Partikel austreten können. Die Umhüllung kann vorzugsweise aus Kunststoff bestehen und die Durchlassöffnungen können vorzugsweise die Form kleiner runder Löcher oder kleiner Schlitze aufweisen. Der Wasserdruck ist für die erfindungsgemässe Verwendung nicht kritisch. Vorzugsweise sind jedoch die Elektrolysekammer und das Wassereinlass- und Wasserauslasssystem so beschaffen, dass der Druckabfall möglichst gering ist.

Als Elektrodenmaterialien eignen sich grundsätzlich alle üblicherweise verwendeten Materialien, soweit deren Anwendung in der Wasseraufbereitung unbedenklich ist. Im allgemeinen wird Graphit bevorzugt. Es ist aber ebenso möglich andere Materialien wie beispielsweise Edelmetalle oder mit Edelmetallen oder mit Mischoxiden beschichteter Titanstahl einzusetzen. Der Elektrodenabstand ist nicht kritisch und kann beispielsweise etwa 2 cm betragen.

Die an den Elektroden anliegende elektrische Gleichspannung kann wahlweise senkrecht oder parallel zur Strömungsrichtung der wässrigen Lösung wirken.

Geeignete bipolare Elektroden sind dem Fachmann ebenfalls bekannt. Gemäss einer bevorzugten Ausführungsform kann die im Raum zwischen den Elektroden angeordnete bipolare Elektrode beispielsweise eine Festbettelektrode sein, wobei das Festbett insbesondere aus elektrisch leitenden Partikeln und nicht leitenden Partikeln bestehen kann. Als elektrisch leitende Partikel eignen sich beispielsweise Graphit, Aktivkohle, synthetische Kohlen und Edelmetalle oder andere Metalle, die keine Ionen abgeben, wobei sich Aktivkohle und insbesondere Graphit als besonders geeignet erwiesen haben. Als nicht leitende Partikel eignen sich grundsätzlich beliebige inerte und wasserunlösliche nicht leitende Materialien, insbesondere Kies, Glas und Kunststoffe. Die Partikelgrösse der leitenden und nicht leitenden Teilchen ist nicht kritisch; im allgemeinen sind aber Materialien mit einer mittleren Teilchengrösse von etwa 0,5 bis 2 mm bevorzugt. Um die Gefahr von Kurzschlüssen zu vermeiden, sollte das Volumenverhältnis der leitenden Partikel zu den nicht leitenden Partikeln im Festbett vorzugsweise nicht mehr als etwa 1:1 betragen; besonders bevorzugt ist im allgemeinen ein Verhältnis von etwa 1:2. Bei Verwendung eines Festbetts können die Elektroden vorzugsweise direkt in das Festbett eingeführt sein und die wässrige Lösung kann vorzugsweise von oben nach unten oder horizontal durch das Festbett fliessen.

Anstelle einer Partikelschüttung können ferner beispielsweise auch Graphitstäbchen verwendet werden, die zur Vermeidung von Kurzschlüssen mit Ringen aus einem isolierenden Material wie Nylon versehen und als Stapel angeordnet sind. Eine solche bipolare Elektrode ist z.B. in Electrochimica Acta 22, 347-352 (1977) beschrieben.

Gemäss einer weiteren bevorzugten Ausführungsform kann die bipolare Elektrode als Wirbelbett aus elektrisch leitenden Partikeln ausgebildet sein, wobei in dieser Ausführungsform die wässrige Lösung vorzugsweise von unten nach oben durch die Wirbelschicht geleitet wird. Vorzugsweise wird in dieser Ausführungsform die Durchflussrate so hoch gewählt, dass allein durch die Strömung eine ausreichende Verwirbelung erzeugt wird. Da Kurzschlüsse infolge der Verwirbelung vermieden werden, erübrigt sich im Prinzip der Einsatz nicht leitender Partikel. Gewünschtenfalls kann aber das Wirbelbett neben den elektrisch leitenden Partikeln auch nicht leitende Partikel enthalten, wobei die oben, in Zusammenhang mit dem Festbett genannten Materialien bevorzugt sind. Besonders bevorzugt ist die Verwendung eines Wirbelbetts, das lediglich aus Graphitpartikeln besteht.

Als bipolare Elektrode kann man ferner vorzugsweise auch poröse Folien aus einem elektrisch leitenden Material verwenden, die parallel zu den Elektroden angeordnet sind. Um die Folien untereinander und von den Elektroden getrennt zu halten, können vorzugsweise Abstandhalter aus einem nicht leitenden Material, wie Kunststoff, Glas und dergleichen, verwendet werden.

Im Unterschied zu dreidimensionalen Elektroden ist der elektrische Strom bei bipolaren Elektroden stets gezwungen sowohl durch das elektrisch leitende Material der bipolaren Elektrode als auch durch das flüssige Medium zu wandern. In den Zwickel zwischen Inertmaterial und leitendem Material und in den Poren des leitenden Materials entstehen sehr hohe elektrische Feldstärken von mehreren tausend V/m. Aus Untersuchungen von Onsager (J. Chem. Phys. 2, 599-615 (1934)) ist bekannt, dass diese hohen Feldstärken zur Änderung der Dissoziationskonstanten führen können. Möglicherweise bewirken die hohen Feldstärken eine erhöhte Alkalinität, woraus eine Kristallkeimbildung resultieren könnte.

Grundsätzlich treten beim Betrieb mit Gleichstrom an der Anode und den anodisch wirkenden Flächen der bipolaren Elektrode bzw. an der Kathode und den kathodisch wirkenden Flächen der bipolaren Elektrode die gleichen elektrochemischen Reaktionen auf wie bei der normalen Elektrolyse, nämlich die Bildung von Sauerstoff aus Wasser und von Kohlendioxid aus Bicarbonat bzw. die Bildung von Wasserstoff aus Wasser und von Carbonat aus Bicarbonat. Die Oxidationswirkung an der Anode und den anodisch wirkenden Flächen der bipolaren Elektrode dürfte denn auch ein Grund für die gleichzeitige Entkeimungswirkung der erfindungsgemässen Verwendung sein. Weiterhin bewirkt die Bildung von Carbonat die Ausfällung von Calcit und die im Wasser befindlichen Magnesiumionen werden in den Zwickelbereichen der bipolaren Elektrode als Magnesiumhydroxid ausgefällt.

Aufgrund der Umpolung der Elektroden werden aber bei der erfindungsgemässen Verwendung allfällige Ausfällungen wieder in Lösung gebracht, womit ein Verblocken der Festbettelektrode wirksam verhindert und zudem vermieden wird, dass sich der Salzgehalt der wässrigen Lösung wesentlich ändert.

Durch das Zusammenwirken der oben beschriebenen Mechanismen kann daher erfindungsgemäss die Steinbildung oder Calcitabscheidung deutlich reduziert oder gar verhindert und zugleich erreicht werden, dass die Zusammensetzung des Wassers im wesentlichen unverändert bleibt.

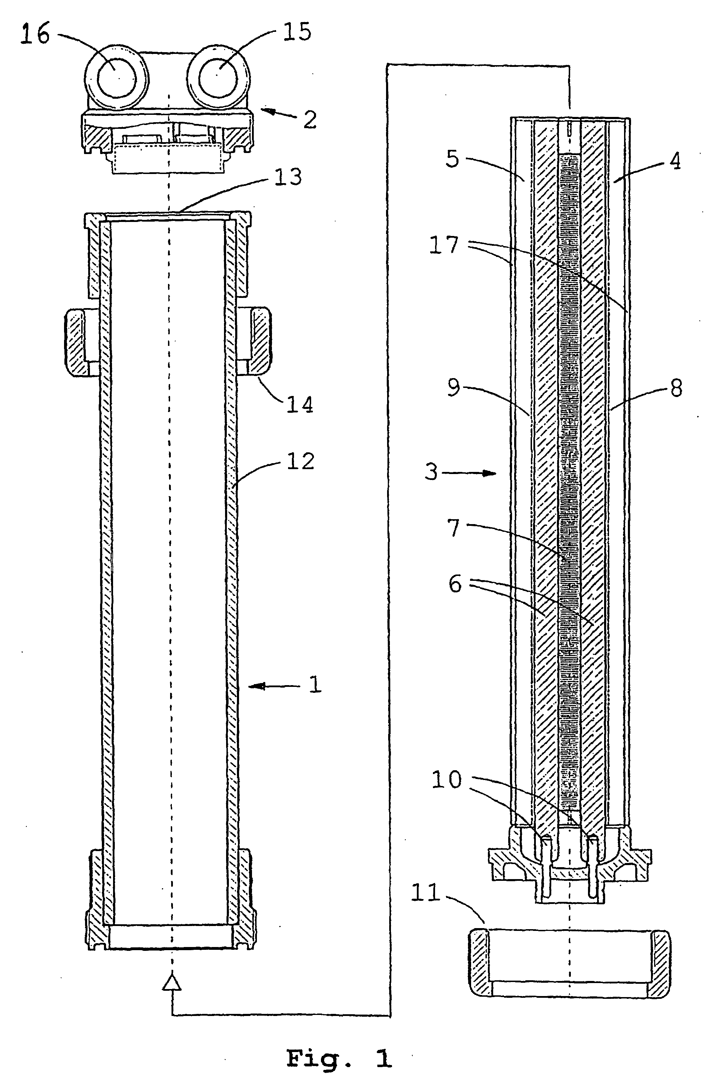

Eine bevorzugte Ausführungsform der Elektrolysevorrichtung zum Betrieb mit Gleichstrom ist in Figur 1 im Längschnitt dargestellt, wobei zur besseren Anschaulichkeit das Gehäuse 1, der Anschlusskopf 2 und die austauschbare Kartusche 3 einzeln abgebildet sind.

Figur 1 zeigt eine austauschbare Kartusche 3 mit einer Kammer 4 für die unbehandelte wässrige Lösung, einer Kammer 5 für die behandelte wässrige Lösung und einer Elektrodenkammer, in der zwei Graphit-Elektroden 6 und eine bipolare Festbettelektrode 7 aus elektrisch leitenden und nicht leitenden Partikeln angeordnet sind und die gegen die Kammern für die unbehandelte bzw. behandelte wässrige Lösung mittels je einer Umhüllung 8,9 mit Durchtrittsöffnungen in Form kleiner Löcher oder Schlitze abgegrenzt ist. Die Elektroden 6 werden über Stromanschlüsse 10 mit einer nicht gezeigten Regeleinheit verbunden, die in Zeitintervallen die Umpolung der Elektroden gestattet und die ihrerseits an eine elektrische Gleichspannungsquelle angeschlossen ist. Die Kartusche 3 wird - wie durch den Pfeil und die als durchbrochene Linie eingezeichnete Achse der Vorrichtung angedeutet - von unten in das Gehäuse 1 einschoben und mit einer Überwurfmutter 11 befestigt. Das Gehäuse 1 besteht im wesentlichen aus einem Mantelrohr 12 und weist an seinem anderen Ende ein Ableitblech 13 zur Abschirmung des elektrischen Feldes und eine nach oben verschiebbare Überwurfmutter 14 auf, mit welcher der eine Einlassöffnung 15 für die unbehandelte wässrige Lösung und eine Auslassöffnung 16 für die behandelte wässrige Lösung aufweisende Anschlusskopf 2 am Gehäuse 1 befestigt wird. Die Kartusche 3 kann vorzugsweise eine äussere Umhüllung 17 aufweisen, die die Kammern 4,5 für die wässrige Lösung nach aussen abschliesst. Fehlt eine solche Umhüllung 17, so übernimmt das Mantelrohr 12 diese Funktion. Das Mantelrohr 12 und die äussere Umhüllung 17 der Kartusche 3 weisen die Form eines Zylinders auf und vorzugsweise kann auch die mit Durchtrittsöffnungen versehene Umhüllungen 8,9 zusammen zumindest annähernd die Form eines Zylinders aufweisen, wobei die Kammern 4,5 für die unbehandelte und die behandelte Lösung durch Trennwände, die über bzw. unter der Zeichenebene liegen und zwischen der Umhüllungen 8,9 und der Umhüllung 17 bzw. dem Mantelrohr 12 angeordnet sind, voneinander getrennt sind.

Wird der in Figur 1 gezeigten Vorrichtung eine wässrige Lösung über die Einlassöffnung 15 zugeführt, so fliesst die Lösung von Kammer 4 durch die Durchtrittsöffnungen der Umhüllung 8 in die Elektrodenkammer, strömt im wesentlichen parallel zum elektrischen Feld durch das Festbett und fliesst nach dem Durchtritt durch die Durchtrittsöffnungen der Umhüllung 9 über die Kammer 5 und die Auslassöffnung 16 ab.

Die erfindungsgemässe Verwendung und deren Wirkung wird anhand der folgenden Beispiele weiter veranschaulicht.

### Beispiel 1

Trinkwasser der Gemeinde Mondsee (Österreich) wurde in zwei gleiche Teilströme aufgeteilt. Ein Teilstrom wurde durch eine umpolbare Elektrolysevorrichtung und anschiessend durch einen Heisswasserboiler geleitet. Der andere Teilstrom wurde ohne Vorbehandlung direkt durch einen Heisswasserboiler derselben Bauart geleitet. In beiden Boilern waren Heizspiralen mit gleicher Heizleistung eingebaut, und es wurden identische Regler und Messglieder verwendet, wobei zur Temperaturregelung PID-Regler (Proportional-Integral-Differential-Regler) dienten.

Als Elektrolysevorrichtung wurde eine Vorrichtung gemäss Figur 1 mit zwei Graphit-Elektroden, einem Elektrodenabstand von 2 cm und einer bipolaren Festbettelektrode aus Graphit-Partikeln und Kies im Volumenverhältnis von 1:2 verwendet. Die Versuche wurden bei einer Gleichspannung von 40 V durchgeführt, und die Umpolung erfolgt abwechselnd nach Intervallen von 30 bzw. 45 Sekunden. Der Durchsatz an Trinkwasser betrug 500 l/h. Die Boilertemperatur wurde in beiden Boilern auf 70°C geregelt.

Nach Durchfluss einer Wassermenge von je etwa 400 m³ wurden beide Boiler mit Salpetersäure ausgesäuert und die in den Boilern abgeschiedene Calcitmenge bestimmt.

Das verwendete Trinkwasser der Gemeinde Mondsee weist ein Gesamthärte von 16,5°dH, eine Carbonathärte von 15,5° dH, eine elektrische Leitfähigkeit von 530 µS/cm (25°C), einen pH-Wert von 7,5 (20°C) und eine Säurekapazität bis pH 4,3 von 5,5 mmol/l auf. Hieraus errechnen sich nach DIN 38404-10 folgende Werte:

| | | |
|---|---|---|
| Berechnungstemperatur | 25°C | 70°C |
| Pufferungsintensität | 0,86 mmol/l | 1,09 mmol/l |
| Sättigungsindex | 0,46 | 0,83 |
| Calcitsättigungs-pH-Wert | 7,13 | 6,79 |
| Calcitabscheidekapazität | 34,5 mg/l | 74,87 mg/l |

Wie die Berechnungen zeigen beträgt die Calcitabscheidekapazität ca. 75 mg/l.

Die Berechnung der Wirksamkeit erfolgte wie in der DVGW-Vorschrift "Prüfverfahren zur Beurteilung der Wirksamkeit von Wasserbehandlungsanlagen zur Verminderung von Steinbildung" angegeben. Für das Wasser in Mondsee ergab sich aufgrund der obigen Vergleichversuche ein Wirksamkeitsfaktor von 98,5%.

### Beispiel 2

Die Versuchführung erfolgte mit Trinkwasser der Gemeinde Schriesheim (Deutschland). Hierbei wurde ein Volumenstrom von 1 m³/h kontinuierlich durch eine umpolbare Elektrolysevorrichtung, wie in Beispiel 1 beschrieben, geleitet und ein Teilstrom von 20 l/h des behandelten Wassers einem Heisswasserboiler zugeführt. Die an der Elektrolysevorrichtung angelegte Gleichspannung betrug 35 V, und die Umpolung erfolgte abwechselnd nach Intervallen von 30 und 45 sec. Durch eine Blindstrecke, d.h. ohne Vorbehandlung des Wassers, wurde ein Volumenstrom von ebenfalls 20 l/h direkt durch einen zweiten Heisswasserboiler geleitet. In beiden Strecken, d.h. der Strecke mit Vorbehandlung und der Blindstrecke, waren Heisswasserboiler der selben Bauart und Heizschlangen gleicher elektrischer Leistung eingebaut. Die Boilertemperatur wurde in beiden Strecken mit identischen Reglern auf eine Temperatur von 80°C geregelt. Die gesamte Versuchsdauer betrug 21 Tage.

Das Trinkwasser wurde vor und nach dem Durchgang durch die Elektrolysevorrichtung untersucht, wobei folgende Werte erhalten wurden:

| | vor Behandlung | nach Behandlung |
|---|---|---|
| Calcium | 135 mg/l | 134 mg/l |
| Magnesium | 22,3 mg/l | 22,7 mg/l |
| Natrium | 21,3 mg/l | 21,4 mg/l |
| Chlorid | 69 mg/l | 69 mg/l |
| Sulfat | 79,2 mg/l | 77,7 mg/l |
| Nitrat | 36,6 mg/l | 36,6 mg/l |
| pH-Wert (20°C) | 7,38 | 7,37 |
| Leitfähigkeit (20°C) | 109,2 mS/m | 109,4 mS/m |
| Säurekapazität bis pH 4,3 | 5,36 mol/m³ | 5,5 mol/m³ |

Die Analyseergebnisse zeigen, dass durch die Vorbehandlung in der Elektrolysevorrichtung keine nennenswerte chemische Änderung des Trinkwassers bewirkt wird. Die Auswertung der Kalkmengen in den beiden Boilern (nach der in Beispiel 1 beschriebenen Methode) ergab, dass die Steinbildung durch die Vorbehandlung mit einem Wirkungsfaktor von 92,2% verhindert wurde, d.h. eine Steinbildung unter Beibehaltung der Wasserqualität weitgehend vermieden werden konnte.

## Patentansprüche

1. Verwendung einer Elektrolysevorrichtung, die in einer Elektrolysekammer mindestens zwei Elektroden (6) und zwischen den Elektroden zusätzlich eine bipolare Elektrode (7) aufweist, zur Reduzierung oder Verhinderung von Steinbildung aus einer zur Steinbildung neigenden wässrigen Lösung, indem
die zur Steinbildung neigende wässrige Lösung der Elektrolysekammer zugeführt wird,
die Elektrolysevorrichtung so betrieben wird, dass an den Elektroden eine Gleichspannung anliegt, wobei mindestens eine Elektrode als Anode und mindestens eine Elektrode als Kathode geschaltet ist und die Elektroden in Zeitintervallen so umgepolt werden, dass die Zusammensetzung der wässrigen Lösung im wesentlichen unverändert bleibt, und nach Durchfluss der wässrigen Lösung durch die Elektrolysekammer eine behandelte wässrige Lösung mit deutlich verringerter Neigung zur Steinbildung erhalten wird.

2. Verwendung nach Anspruch 1 zur Behandlung von Wasser mit einem natürlichen Gehalt an Carbonaten, Hydrogencarbonaten und Sulfaten von Calcium und Magnesium.

3. Verwendung nach Anspruch 1 oder 2, **dadurch gekennzeichnet, dass** die gesamte, der Elektrolysekammer zugeführte wässrige Lösung nach dem Durchfluss durch die Elektrolysekammer eine deutlich verringerte Neigung zur Steinbildung aufweist und im wesentlichen kein Calcit oder überhartes Wasser als Abfall anfällt.

4. Verwendung nach einem der Ansprüche 1 bis 3, **dadurch gekennzeichnet, dass** die Gesamthärte der behandelten wässrigen Lösung höchstens 1°dH vorzugsweise höchstens 0,5°dH, unterhalb jener der zugeführten wässrigen Lösung liegt.

5. Verwendung nach einem der Ansprüche 1 bis 4, **dadurch gekennzeichnet, dass** der pH-Wert der behandelten wässrigen Lösung höchstens um 0,05 von jenem der zugeführten wässrigen Lösung abweicht.

6. Verwendung nach einem der Ansprüche 1 bis 5, **dadurch gekennzeichnet, dass** an den Elektroden (6) eine Gleichspannung anliegt und die Elektroden periodisch nach jeweils gleichbleibenden Zeitintervallen umgepolt werden.

7. Verwendung nach einem der Ansprüche 1 bis 5, **dadurch gekennzeichnet, dass** an den Elektroden (6) eine Gleichspannung anliegt und die Elektroden in Zeitintervallen umgepolt werden, wobei zwischen den Umpolungen abwechselnd kürzere und längere Zeitintervalle eingehalten werden.

8. Verwendung nach einem der Ansprüche 1 bis 7, **dadurch gekennzeichnet, dass** an den Elektroden (6) eine Gleichspannung anliegt und die Elektroden in Zeitintervallen von höchstens 60 Sekunden, vorzugsweis 1 bis 60 Sekunden, umgepolt werden.

9. Verwendung nach einem der Ansprüche 1 bis 8, **dadurch gekennzeichnet, dass** das Verhältnis der Stromstärke des durch die Elektrolysekammer fliessenden elektrischen Stromes zur Durchflussrate der zugeführten wässrigen Lösung höchstens 2 A·h/m³ beträgt.

10. Verwendung nach Anspruch 9, **dadurch gekennzeichnet, dass** das Verhältnis der Stromstärke des durch die Elektrolysekammer fliessenden elektrischen Stromes zur Durchflussrate der zugeführten wässrigen Lösung 0,5 bis 1,5 A·h/m³, vorzugsweise 1,0 bis 1,3 A·h/m³, beträgt.

11. Verwendung nach einem der Ansprüche 1 bis 10, **dadurch gekennzeichnet, dass** die Stromstärke des durch die Elektrolysekammer fliessenden elektrischen Stromes höchstens 4 A, vorzugsweise höchstens 2 A, beträgt.

12. Verwendung nach einem der Ansprüche 1 bis 11, **dadurch gekennzeichnet, dass** an den Elektroden (6) eine elektrische Gleichspannung anliegt, die 5-20 V pro cm Elektrodenabstand beträgt.

13. Verwendung nach einem der Ansprüche 1 bis 12, **dadurch gekennzeichnet, dass** die Elektrolysevorrichtung Elektroden (6) aus Graphit, Edelmetall oder mit Edelmetall oder Mischoxiden beschichtetem Titanstahl aufweist.

14. Verwendung nach einem der Ansprüche 1 bis 13, **dadurch gekennzeichnet, dass** die Elektroden (6) im Abstand von etwa 2 cm angeordnet sind.

15. Verwendung nach einem der Ansprüche 1 bis 14, **dadurch gekennzeichnet, dass** die bipolare Elektrode (7) eine bipolare Festbettelektrode ist.

16. Verwendung nach Anspruch 15, **dadurch gekennzeichnet, dass** die bipolare Festbettelektrode (7) ein Festbett aus elektrisch leitenden Partikeln und nicht leitenden Partikeln ist.

17. Verwendung nach Anspruch 16, **dadurch gekennzeichnet, dass** das Festbett elektrisch leitende Partikel aus Graphit oder Aktivkohle und nicht leitende Partikel aus Kies, Glas oder Kunststoff aufweist.

18. Verwendung nach Anspruch 16 oder 17, **dadurch gekennzeichnet, dass** die elektrisch leitenden Partikel und die nicht leitenden Partikel im Festbett im Volumenverhältnis von höchstens 1:1, vorzugsweise etwa 1:2, vorliegen.

19. Verwendung nach einem der Ansprüche 1 bis 14, **dadurch gekennzeichnet, dass** die Elektrolysevorrichtung als bipolare Elektrode (7) poröse Folien aus einem elektrisch leitenden Material aufweist, die parallel zu den Elektroden (6) angeordnet sind.

20. Verwendung nach Anspruch 19, **dadurch gekennzeichnet, dass** die Folien untereinander und von den Elektroden (6) durch Abstandhalter aus einem nicht leitenden Material getrennt sind.

21. Verwendung nach einem der Ansprüche 1 bis 14, **dadurch gekennzeichnet, dass** die bipolare Elektrode (7) ein Wirbelbett aus elektrisch leitenden Partikeln ist und die wässrige Lösung von unten nach oben durch das Wirbelbett geleitet wird.

22. Verwendung nach einem der Ansprüche 1 bis 21, **dadurch gekennzeichnet, dass** die Elektrolysevorrichtung ein Wassereinlasssystem (4,15) und ein Wasserauslasssystem (5,16) aufweist, die von der Elektrolysekammer durch eine mit Durchlassöffnungen versehene Umhüllung (8,9) abgrenzt sind.

23. Verwendung nach einem der Ansprüche 1 bis 22, **dadurch gekennzeichnet, dass** der Elektrolysekammer bei der ersten Inbetriebnahme oder nach einer Reinigung der Elektrolysekammer eine zur Steinbildung neigende wässrige Lösung zugeführt wird, an den Elektroden eine Gleichspannung anliegt und die Elektroden abwechselnd in kürzeren und längeren Zeitintervallen umgepolt werden, bis die behandelte wässrige Lösung eine signifikante Verringerung der Neigung zur Steinbildung aufweist.

## Claims

1. Use of an electrolysis apparatus which has, in an electrolysis chamber, at least two electrodes (6) and in addition a bipolar electrode (7) between the electrodes for reducing or preventing scale formation from an aqueous solution which tends to form scale, wherein
the aqueous solution which tends to form scale is fed to the electrolysis chamber,
the electrolysis apparatus is operated in such a way that a DC potential is applied to the electrodes so that at least one electrode acts as anode and at least one electrode acts as cathode and the polarity of the electrodes is reversed at intervals of time in such a way that the composition of the aqueous solution remains essentially unchanged, and,
after the aqueous solution has passed through the electrolysis chamber, a treated aqueous solution having a significantly reduced tendency to form scale is obtained.

2. Use according to Claim 1 for the treatment of water having a natural content of carbonates, hydrogencarbonates and sulphates of calcium and magnesium.

3. Use according to Claim 1 or 2, **characterized in that** the entire aqueous solution fed to the electrolysis chamber has, after passing through the electrolysis chamber, a significantly reduced tendency to form scale and essentially no calcite or excessively hard water is obtained as waste.

4. Use according to any of Claims 1 to 3, **characterized in that** the total hardness of the treated aqueous solution is not more than 1°dH, preferably not more than 0.5°dH, below that of the aqueous solution fed in.

5. Use according to any of Claims 1 to 4, **characterized in that** the pH of the treated aqueous solution differs by not more than 0.05 from that of the aqueous solution fed in.

6. Use according to any of Claims 1 to 5, **characterized in that** a DC potential is applied to the electrodes (6) and the polarity of the electrodes is reversed periodically at constant intervals of time.

7. Use according to any of Claims 1 to 5, **characterized in that** a DC potential is applied to the electrodes (6) and the polarity of the electrodes is reversed at intervals of time, with the polarity being reversed after alternately relatively short and relatively long time intervals.

8. Use according to any of Claims 1 to 7, **characterized in that** a DC potential is applied to the electrodes (6) and the polarity of the electrodes is reversed at time intervals of not more than 60 seconds, preferably from 1 to 60 seconds.

9. Use according to any of Claims 1 to 8, **characterized in that** the ratio of the electric current flowing through the electrolysis chamber to the flow rate of the aqueous solution fed in is not more than 2 A·h/m³.

10. Use according to Claim 9, **characterized in that** the ratio of the electric current flowing through the electrolysis chamber to the flow rate of the aqueous solution fed in is from 0.5 to 1.5 A·h/m³, preferably from 1.0 to 1.3 A·h/m³.

11. Use according to any of Claims 1 to 10, **characterized in that** the electric current flowing through the electrolysis chamber is not more than 4 A, preferably not more than 2 A.

12. Use according to any of Claims 1 to 11, **characterized in that** a DC potential of 5-20 V per cm between the electrodes (6) is applied to the electrodes.

13. Use according to any of Claims 1 to 12, **characterized in that** the electrolysis apparatus has electrodes (6) of graphite, noble metal or titanium steel coated with noble metal or mixed oxides.

14. Use according to any of Claims 1 to 13, **characterized in that** the electrodes (6) are located at a distance of about 2 cm from one another.

15. Use according to any of Claims 1 to 14, **characterized in that** the bipolar electrode (7) is a bipolar fixed-bed electrode.

16. Use according to Claim 15, **characterized in that** the bipolar fixed-bed electrode (7) is a fixed bed of electrically conductive particles and nonconductive particles.

17. Use according to Claim 16, **characterized in that** the fixed bed contains electrically conductive particles of graphite or activated carbon and nonconductive particles of gravel, glass or plastic.

18. Use according to Claim 16 or 17, **characterized in that** the electrically conductive particles and the nonconductive particles are present in the fixed bed in a volume ratio of not more than 1:1, preferably about 1:2.

19. Use according to any of Claims 1 to 14, **characterized in that** the bipolar electrode (7) of the electrolysis apparatus comprises porous sheets of electrically conductive material which are arranged parallel to the electrodes (6).

20. Use according to Claim 19, **characterized in that** the sheets are separated from one another and from the electrodes (6) by spacers made of nonconductive material.

21. Use according to any of Claims 1 to 14, **characterized in that** the bipolar electrode (7) is a fluidized bed of electrically conductive particles and the aqueous solution is passed from the bottom upwards through the fluidized bed.

22. Use according to any of Claims 1 to 21, **characterized in that** the electrolysis apparatus has a water inlet system (4,15) and a water outlet system (5,16) which are separated from the electrolysis chamber by an envelope (8,9) provided with openings.

23. Use according to any of Claims 1 to 22, **characterized in that** when the electrolysis chamber is put into operation for the first time or after the electrolysis chamber has been cleaned, an aqueous solution which tends to form scale is fed to the electrolysis chamber, a DC potential is applied to the electrodes and the polarity of the electrodes is reversed alternately at relatively short and relatively long time intervals until the treated aqueous solution has a significantly lower tendency to form scale.

## Revendications

1. Utilisation d'un dispositif d'électrolyse, qui présente dans une chambre d'électrolyse au moins deux électrodes (6) et en plus une électrode bipolaire (7) entre les électrodes, pour réduire ou empêcher l'entartrage à partir d'une solution aqueuse ayant une tendance à l'entartrage, du fait que l'on introduit dans la chambre d'électrolyse la solution aqueuse ayant une tendance à l'entartrage, que le dispositif d'électrolyse est conduit de telle manière qu'une tension continue soit présente aux électrodes, au moins une électrode étant raccordée en anode et au moins une électrode étant raccordée en cathode et les électrodes étant soumises à des intervalles de temps à une inversion de polarité de telle façon que la composition de la solution aqueuse reste sensiblement inchangée, et qu'après le passage de la solution aqueuse à travers la chambre d'électrolyse on obtienne une solution aqueuse traitée avec une tendance à l'entartrage nettement réduite.

2. Utilisation selon la revendication 1 pour le traitement d'eau avec une teneur naturelle en carbonates, hydrogénocarbonates et sulfates de calcium et de magnésium.

3. Utilisation selon la revendication 1 ou 2, **caractérisée en ce que** toute la solution aqueuse introduite dans la chambre d'électrolyse présente, après avoir circulé à travers la chambre d'électrolyse, une tendance à l'entartrage nettement réduite et qu'il ne se forme pratiquement pas de calcite ou d'eau superdure comme déchet.

4. Utilisation selon l'une quelconque des revendications 1 à 3, **caractérisée en ce que** la dureté totale de la solution aqueuse traitée se situe au maximum à 1° dH, de préférence au maximum à 0,5° dH, en dessous de celle de la solution aqueuse introduite.

5. Utilisation selon l'une quelconque des revendications 1 à 4, **caractérisée en ce que** la valeur de pH de la solution aqueuse traitée diffère au maximum de 0,05 de celle de la solution aqueuse introduite.

6. Utilisation selon l'une quelconque des revendications 1 à 5, **caractérisée en ce qu'**une tension continue est présente aux électrodes (6) et **en ce que** la polarité des électrodes est inversée périodiquement après des intervalles de temps restant chaque fois constants.

7. Utilisation selon l'une quelconque des revendications 1 à 5, **caractérisée en ce qu'**une tension continue est présente aux électrodes (6) et **en ce que** la polarité des électrodes est inversée à des intervalles de temps, dans laquelle on respecte des intervalles de temps alternativement plus courts et plus longs entre les inversions de polarité.

8. Utilisation selon l'une quelconque des revendications 1 à 7, **caractérisée en ce qu'**une tension continue est présente aux électrodes (6) et **en ce que** la polarité des électrodes est inversée à des intervalles de temps de 60 secondes au maximum, de préférence de 1 à 60 secondes.

9. Utilisation selon l'une quelconque des revendications 1 à 8, **caractérisée en ce que** le rapport de l'intensité du courant électrique circulant à travers la chambre d'électrolyse au débit de la solution aqueuse introduite vaut au maximum 2 A·h/m³.

10. Utilisation selon la revendication 9, **caractérisée en ce que** le rapport de l'intensité du courant électrique circulant à travers la chambre d'électrolyse au débit de la solution aqueuse introduite vaut de 0,5 à 1,5 A·h/m³, de préférence de 1,0 à 1,3 A·h/m³.

11. Utilisation selon l'une quelconque des revendications 1 à 10, **caractérisée en ce que** l'intensité du courant électrique circulant à travers la chambre d'électrolyse vaut au maximum 4 A, de préférence au maximum 2 A.

12. Utilisation selon l'une quelconque des revendications 1 à 11, **caractérisée en ce qu'**une tension électrique continue est présente aux électrodes (6), avec une valeur de 5 - 20 V par cm d'écartement des électrodes.

13. Utilisation selon l'une quelconque des revendications 1 à 12, **caractérisée en ce que** le dispositif d'électrolyse présente des électrodes (6) en graphite, en métal noble ou en acier au titane revêtu de métal noble ou d'oxydes mixtes.

14. Utilisation selon l'une quelconque des revendications 1 à 13, **caractérisée en ce que** les électrodes (6) sont disposées avec un écartement d'environ 2 cm.

15. Utilisation selon l'une quelconque des revendications 1 à 14, **caractérisée en ce que** l'électrode bipolaire (7) est une électrode bipolaire à lit fixe.

16. Utilisation selon la revendication 15, **caractérisée en ce que** l'électrode bipolaire à lit fixe (7) est un lit fixe composé de particules électriquement conductrices et de particules électriquement non conductrices.

17. Utilisation selon la revendication 16, **caractérisée en ce que** le lit fixe présente des particules électriquement conductrices en graphite ou en charbon actif et des particules électriquement non conductrices en gravier, en verre ou en matière plastique.

18. Utilisation selon la revendication 16 ou 17, **caractérisée en ce que** les particules électriquement conductrices et les particules non conductrices sont présentes dans le lit fixe en un rapport volumique de 1:1 au maximum, de préférence d'environ 1:2.

19. Utilisation selon l'une quelconque des revendications 1 à 14, **caractérisée en ce que** le dispositif d'électrolyse présente comme électrode bipolaire (7) des feuilles poreuses en une matière électriquement conductrice, qui sont disposées parallèlement aux électrodes (6).

20. Utilisation selon la revendication 19, **caractérisée en ce que** les feuilles sont séparées l'une de l'autre et des électrodes (6) par des pièces d'écartement en une matière non conductrice.

21. Utilisation selon l'une quelconque des revendications 1 à 14, **caractérisée en ce que** l'électrode bipolaire (7) est un lit fluidisé de particules électriquement conductrices et **en ce que** la solution aqueuse est conduite de bas en haut à travers le lit fluidisé.

22. Utilisation selon l'une quelconque des revendications 1 à 21, **caractérisée en ce que** le dispositif d'électrolyse présente un réseau d'arrivée d'eau (4, 15) et un réseau de départ d'eau (5, 16), qui sont séparés de la chambre d'électrolyse par une enveloppe (8, 9) pourvue d'ouvertures de passage.

23. Utilisation selon l'une quelconque des revendications 1 à 22, **caractérisée en ce qu'**à la première mise en service ou après un nettoyage de la chambre d'électrolyse, on introduit dans la chambre d'électrolyse une solution aqueuse ayant une tendance à l'entartrage, **en ce que** l'on applique une tension continue aux électrodes et **en ce que** l'on inverse la polarité des électrodes à des intervalles de temps alternativement plus courts et plus longs, jusqu'à ce que la solution aqueuse traitée présente une nette réduction de la tendance à l'entartrage.
